# FASCICULE DE BREVET EUROPEEN

(11) **EP 3 474 030 B1**
(45) Date de publication et mention de la délivrance du brevet: **22.01.2020**
(21) Numéro de dépôt: 18197673.9
(22) Date de dépôt: 28.09.2018
(51) Int. Cl.: G01S 13/91, G01S 19/15, G01S 1/18

(54) **SYSTÈME ET PROCÉDÉ D'AIDE À L'ATTERRISSAGE D'UN AÉRONEF**
LANDUNGSHILFSSYSTEM UND -VERFAHREN FÜR EIN LUFTFAHRZEUG
SYSTEM AND METHOD FOR ASSISTING IN THE LANDING OF AN AIRCRAFT

(30) Priorité: 17.10.2017 FR 1759739
(43) Date de publication de la demande: 24.04.2019
(73) Titulaire: Airbus Operations S.A.S., 31060 Toulouse (FR)
(72) Inventeur: BAZILE, Jérôme, 31490 LEGUEVIN (FR); ROUQUETTE, Patrice, 31450 POMPERTUZAT (FR); RAYNAUD, Sylvain, 31700 CORNEBARRIEU (FR); MARCONNET, Nicolas, 31620 CASTELNAU D'ESTRETEFONDS (FR); DISCOURS, Guillaume, 31820 PIBRAC (FR); ETCHEBARNE, Kevin, 31300 TOULOUSE (FR)
(74) Mandataire: Sarraméa, Claude

(56) Documents cités:
- EP-A1- 3 166 093
- US-A- 4 115 777
- US-B1- 7 546 183
- HERBERT HECHT: "So Much to Learn from One Accident Crash of 737 on 25 February 2009", HIGH-ASSURANCE SYSTEMS ENGINEERING (HASE), 2011 IEEE 13TH INTERNATIONAL SYMPOSIUM ON, IEEE, 10 novembre 2011 (2011-11-10), pages 348-351, XP032083408, DOI: 10.1109/HASE.2011.45 ISBN: 978-1-4673-0107-7

## Description

L'invention est relative au domaine de l'atterrissage d'un aéronef sur une piste d'atterrissage d'un aéroport, plus particulièrement lorsque l'aéroport est équipé d'un système d'aide à l'atterrissage aux instruments.

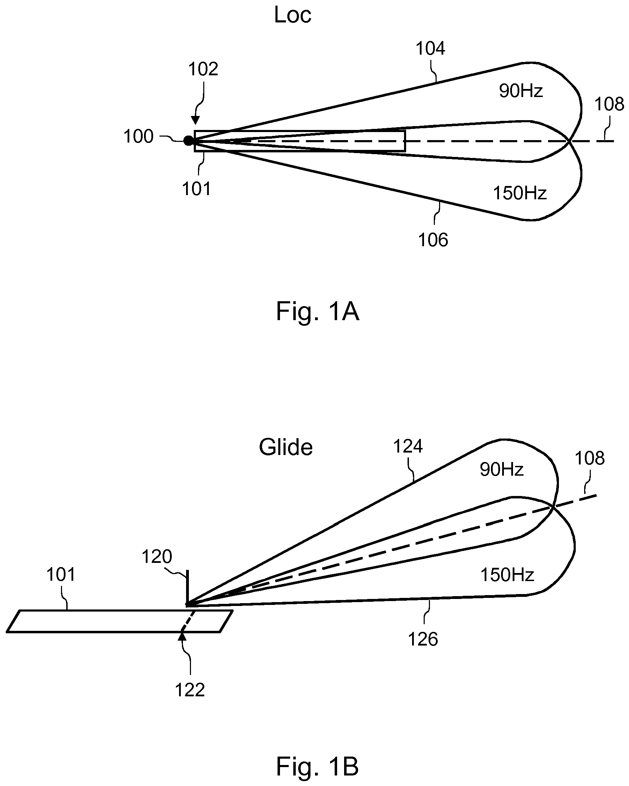

Afin de permettre l'atterrissage des aéronefs, en particulier des avions de transport de passagers, notamment lors de conditions météorologiques entraînant une visibilité réduite de la piste d'atterrissage par les pilotes, de nombreux aéroports sont équipés d'un système d'aide à l'atterrissage aux instruments, encore appelé ILS (« Instrument Landing System » en anglais). Ce système ILS est un système de radionavigation permettant de voler des approches dites de précision le long d'un axe d'approche. Il permet un guidage latéral, ainsi qu'un guidage longitudinal (en pente) de l'aéronef. Pour cela, l'aéroport est équipé des deux ensembles d'antennes, émettant des signaux respectivement appelés Loc et Glide. Comme représenté sur la figure 1A, le signal Loc est émis par un ensemble d'antennes 100 généralement implantées à proximité d'une extrémité 102 de la piste d'atterrissage 101. Ces antennes émettent une première porteuse VHF (« Very High Frequency » en anglais) dont la fréquence est généralement comprise entre 108MHz et 112MHz. Cette première porteuse est émise selon deux lobes 104 et 106. Elle est modulée par deux signaux basses fréquences, respectivement à 90Hz et 150Hz, correspondant aux deux lobes 104 et 106. Pour pouvoir réaliser une approche en vue d'un atterrissage sur la piste d'atterrissage à l'aide du système ILS, un aéronef doit être équipé d'un système d'aide à l'atterrissage comprenant un récepteur de signaux ILS. Ce récepteur de signaux ILS permet de recevoir la première porteuse VHF. Les deux lobes 104 et 106 sont émis par l'ensemble d'antennes 100 de telle façon qu'un taux de modulation, résultant de leur superposition, permette de localiser la position de l'aéronef par rapport à un plan vertical contenant l'axe d'approche 108, en fonction de signaux reçus par le récepteur de signaux ILS : lorsque l'aéronef est situé à droite (dans son sens d'avancement) du plan vertical, la modulation à 90Hz est majoritaire ; lorsque l'aéronef est situé à gauche (dans son sens d'avancement) du plan vertical, la modulation à 150Hz est majoritaire ; lorsque l'aéronef est situé sur le plan vertical, il y a équilibre des modulations à 90Hz et à 150Hz. L'aéronef est équipé d'un système d'aide au guidage comprenant un mode de guidage Loc. Lorsque d'une part ce mode de guidage Loc est activé (ou engagé) par un pilote de l'aéronef et d'autre part le signal Loc est capturé par le récepteur de signaux ILS, ce système d'aide au guidage permet d'aider le guidage de l'aéronef en fonction des signaux reçus par le récepteur de signaux ILS afin d'amener la composante latérale de sa trajectoire dans le plan vertical contenant l'axe d'approche 108.

De façon analogue, comme représenté sur la figure 1B, le signal Glide est émis par un ensemble d'antennes 120 généralement implantées à proximité d'un seuil 122 de la piste d'atterrissage. Ces antennes émettent une deuxième porteuse VHF (« Very High Frequency » en anglais) dont la fréquence est généralement comprise entre 329MHz et 335MHz. Cette deuxième porteuse est émise selon deux lobes 124 et 126. Elle est modulée par deux signaux basses fréquences, respectivement à 90Hz et 150Hz, correspondant aux deux lobes 124 et 126. Le récepteur de signaux ILS de l'aéronef permet de recevoir la deuxième porteuse VHF. Les deux lobes 124 et 126 sont émis par l'ensemble d'antennes 120 de telle façon qu'un taux de modulation, résultant de leur superposition, permette de localiser la position de l'aéronef par rapport à un plan incliné (orthogonal au plan vertical précité) contenant l'axe d'approche 108, en fonction de signaux reçus par le récepteur de signaux ILS : lorsque l'aéronef est situé au-dessus du plan incliné, la modulation à 90Hz est majoritaire ; lorsque l'aéronef est situé au-dessous du plan incliné, la modulation à 150Hz est majoritaire; lorsque l'aéronef est situé sur le plan incliné, il y a équilibre des modulations à 90Hz et à 150Hz. Le système d'aide au guidage de l'aéronef comprend un mode de guidage Glide. Lorsque d'une part ce mode de guidage Glide est activé (ou engagé) par un pilote de l'aéronef et d'autre part le signal Glide est capturé par le récepteur de signaux ILS, le système d'aide au guidage permet d'aider le guidage de l'aéronef en fonction des signaux reçus par le récepteur de signaux ILS de façon à amener la pente de la composante longitudinale de la trajectoire de l'aéronef à correspondre au plan incliné contenant l'axe d'approche 108. La pente de l'axe d'approche 108, et donc du plan incliné, est généralement de 3 degrés.

L'axe d'approche 108 correspond à l'intersection du plan vertical précité et du plan incliné précité. Ainsi, le signal Loc permet de définir une composante Loc de l'axe d'approche (encore appelée axe Loc), correspondant au plan vertical, et le signal Glide permet de définir une composante Glide de l'axe d'approche (encore appelée axe Glide), correspondant au plan incliné. Le système d'aide au guidage de l'aéronef, en permettant un guidage de l'aéronef à la fois selon la composante Loc et selon la composante Glide de l'axe d'approche, permet de guider l'aéronef le long de l'axe d'approche 108. Dans un mode de réalisation, le système d'aide au guidage de l'aéronef correspond à un directeur de vol affichant des indications sur un écran d'affichage du cockpit de l'aéronef, permettant à un pilote de l'aéronef de piloter l'aéronef de façon à suivre l'axe d'approche. Dans un autre mode de réalisation, le système d'aide au guidage de l'aéronef correspond à système de pilotage automatique de l'aéronef.

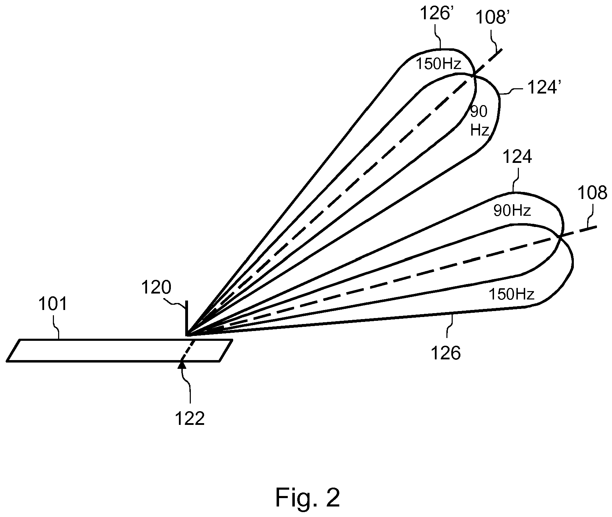

Un tel système ILS est très efficace pour permettre l'atterrissage d'un aéronef sur une piste d'atterrissage en cas de visibilité réduite. Toutefois, il présente une limitation de son fonctionnement du fait qu'il peut parfois exister une réplication des signaux émis par les antennes au sol. En particulier, le signal Glide peut être répliqué à des pentes multiples de la pente de l'axe d'approche. Il en résulte de faux axes Glide pouvant être détectés et capturés par le système d'aide au guidage de l'aéronef. Par exemple, comme représenté sur la figure 2, pour une pente de l'axe d'approche 108 de 3 degrés, il peut exister une réplique de l'axe Glide 108' ayant une pente de valeur différente de la valeur nominale de 3 degrés, par exemple de 9 degrés. Le signal correspondant à la réplique de l'axe Glide comporte deux lobes 124' et 126' inversés par rapport aux lobes 124 et 126 du signal Glide principal correspondant à la pente de 3 degrés. Il en résulte une modulation à 90Hz au-dessous du faux axe Glide et une modulation à 150Hz au-dessus du faux axe Glide. Par conséquent, si un pilote de l'aéronef demande l'activation d'un mode de guidage ILS alors que l'aéronef est à proximité de la réplique de l'axe Glide et au-dessous de celle-ci, la modulation à 90Hz étant prépondérante par rapport à la modulation à 150Hz, le système d'aide au guidage permettra un guidage de l'aéronef en descente et l'aéronef finira par rejoindre l'axe d'approche 108. Par contre, si un pilote de l'aéronef demande l'activation d'un mode de guidage ILS alors que l'aéronef est à proximité de la réplique de l'axe Glide et au-dessus de celle-ci, la modulation à 150Hz étant prépondérante par rapport à la modulation à 90Hz, le système d'aide au guidage permettra un guidage de l'aéronef en montée et l'aéronef ne pourra pas rejoindre l'axe d'approche 108. Il peut en résulter la nécessité d'une manœuvre de remise des gaz afin de voler une nouvelle approche de la piste d'atterrissage.

Les documents US7 546 183 B1 et EP3 166 093 A1 décrivent des systèmes de surveillance de signaux ILS au cours d'une approche d'une piste d'atterrissage par un aéronef et d'alerte d'un pilote de l'aéronef, selon l'art antérieur.

### EXPOSE DE L'INVENTION :

La présente invention a notamment pour but d'apporter une solution à ces problèmes. Elle concerne un système d'aide à l'atterrissage d'un aéronef sur une piste d'atterrissage d'un aéroport équipé d'un système d'atterrissage aux instruments dit ILS, ce système ILS correspondant à un axe d'une approche prédéterminée de la piste d'atterrissage, le système d'aide à l'atterrissage comportant :
- un récepteur de signaux ILS ;
- un ensemble de sources d'informations configurées pour déterminer des informations de position courante de l'aéronef ; et
- une base de données comprenant des informations relatives à ladite approche prédéterminée,
Le système d'aide à l'atterrissage est remarquable en ce qu'il comporte en outre une unité de traitement configurée pour, lorsque le récepteur de signaux ILS n'a pas encore capturé un signal Glide correspondant à un axe Glide de l'approche :
- acquérir, de l'ensemble de sources d'informations, une information de position courante de l'aéronef ;
- acquérir, de la base de données, des informations relatives à l'approche prédéterminée ;
- déterminer, en fonction des informations relatives à l'approche prédéterminée, un volume de protection dans lequel le récepteur de signaux ILS ne risque pas de détecter une réplique du signal Glide ;
- déterminer si la position courante de l'aéronef est au-dessus du volume de protection ; et
- lorsque la position courante de l'aéronef est au-dessus du volume de protection, inhiber la capture du signal Glide par le récepteur de signaux ILS et commander l'émission d'une information d'alerte dans le cockpit de l'aéronef.

Le système permet de faciliter la tâche de travail d'un pilote de l'aéronef pendant une phase de descente de l'aéronef en vue de son atterrissage sur la piste d'atterrissage. L'atterrissage étant réalisé dans le cadre d'une approche prédéterminée (en particulier une approche publiée) utilisant le système ILS de l'aéroport pour guider l'aéronef vers la piste d'atterrissage, le système permet d'éviter la capture d'une réplique de l'axe Glide par le récepteur de signaux ILS de l'aéronef. En effet, lorsque la position courante de l'aéronef est au-dessus du volume de protection, le système inhibe la capture du signal Glide, de telle façon que l'aéronef ne risque pas d'être guidé en fonction de ladite réplique de l'axe Glide. Lorsque la position courante de l'aéronef est dans le volume de protection, le récepteur de signaux ILS ne risque pas de capturer des signaux ILS correspondant à une réplique de l'axe ILS : par conséquent, la capture de l'axe ILS peut être réalisée sans que le pilote ait besoin de surveiller un risque de capture d'une réplique de l'axe Glide.

Dans un mode de réalisation, l'unité de traitement est configurée pour déterminer le volume de protection comme comportant une limite supérieure correspondant à une pente prédéterminée d'approche de la piste d'atterrissage, cette pente prédéterminée d'approche étant égale à la pente d'une réplique de l'axe Glide moins une marge. De façon avantageuse, ladite marge est une marge prédéterminée définie de telle façon que le récepteur de signaux ILS ne risque pas de détecter la réplique du signal Glide lorsque la position courante de l'aéronef est située dans le volume de protection.

Dans un mode particulier de réalisation, l'ensemble de sources d'informations comprend un récepteur de données de navigation par satellites et un système de mesure d'altitude barométrique.

L'invention est également relative à un procédé d'aide à l'atterrissage d'un aéronef sur une piste d'atterrissage d'un aéroport équipé d'un système d'atterrissage aux instruments dit ILS, ce système ILS correspondant à un axe d'une approche prédéterminée de la piste d'atterrissage, l'aéronef comportant :
- un récepteur de signaux ILS ;
- un ensemble de sources d'informations configurées pour déterminer des informations de position courante de l'aéronef ; et
- une base de données comprenant des informations relatives à ladite approche prédéterminée.
Ce procédé est remarquable en ce qu'il comprend les étapes suivantes mises en œuvre par une unité de traitement lorsque le récepteur de signaux ILS n'a pas encore capturé le signal Glide :
- acquérir, de l'ensemble de sources d'informations, une information de position courante de l'aéronef ;
- acquérir, de la base de données, des informations relatives à l'approche prédéterminée ;
- déterminer, en fonction des informations relatives à l'approche prédéterminée, un volume de protection dans lequel le récepteur de signaux ILS ne risque pas de détecter une réplique du signal Glide ;
- déterminer si la position courante de l'aéronef est au-dessus du volume de protection ; et
- lorsque la position courante de l'aéronef est au-dessus du volume de protection, inhiber la capture du signal Glide par le récepteur de signaux ILS et commander l'émission d'une information d'alerte dans le cockpit de l'aéronef.

Dans un mode de réalisation, à l'étape de détermination du volume de protection, le volume de protection est déterminé comme comportant une limite supérieure correspondant à une pente prédéterminée d'approche de la piste d'atterrissage, cette pente prédéterminée d'approche étant égale à la pente d'une réplique de l'axe Glide moins une marge. De façon avantageuse, ladite marge est une marge prédéterminée définie de telle façon que le récepteur de signaux ILS ne risque pas de détecter la réplique du signal Glide lorsque la position courante de l'aéronef est située dans le volume de protection.

Dans un mode particulier de réalisation, à l'étape d'acquisition de l'information de position courante de l'aéronef, l'information de position courante de l'aéronef est acquise pour partie d'un récepteur de données de navigation par satellites et pour partie d'un système de mesure d'altitude barométrique.

L'invention est également relative à un aéronef comportant un système d'aide à l'atterrissage tel que précité.

### DESCRIPTION DETAILLEE :

L'invention sera mieux comprise à la lecture de la description qui suit et à l'examen des figures annexées.
Les figures 1A et 1B, déjà décrites, illustrent un système ILS d'aide à l'atterrissage aux instruments.
La figure 2, déjà décrite, illustre la réplication d'un signal Glide d'un système ILS d'aide à l'atterrissage aux instruments.
Les figures 3 et 4 illustrent des modes de réalisation de l'invention.
La figure 5 représente, de façon schématique, un système d'aide à l'atterrissage conforme à un mode de réalisation de l'invention.
La figure 6 illustre de façon simplifiée un aéronef comportant un cockpit.

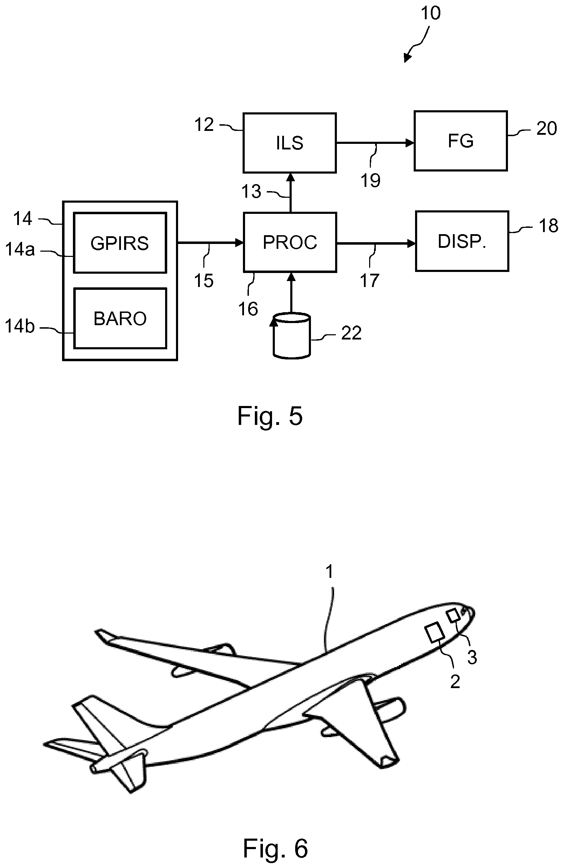

L'aéronef 1 représenté sur la figure 6 comporte un cockpit 3. L'aéronef 1 comprend un système d'aide à l'atterrissage 10 tel que représenté sur la figure 5. Le système d'aide à l'atterrissage 10 comporte un récepteur 12 de signaux ILS (libellé ILS sur la figure), un ensemble de sources d'information 14, un dispositif d'affichage 18 du cockpit 3 de l'aéronef et une unité de traitement 16 (libellée PROC sur la figure). L'aéronef comporte également un système de guidage 20 (libellé FG sur la figure). L'unité de traitement 16 est reliée en entrée à une sortie de l'ensemble de sources d'information 14, par une liaison 15. Le dispositif d'affichage 18 est relié en entrée à une sortie de l'unité de traitement 16, par une liaison 17. Le récepteur de signaux ILS est relié en entrée à une sortie de l'unité de traitement 16, par une liaison 13. Le système de guidage 20 est relié en entrée à une sortie du récepteur 12 de signaux ILS, par une liaison 19. L'unité de traitement 16 est également reliée en entrée à une base de données 22. Dans un mode particulier de réalisation, l'ensemble de sources d'information 14 comprend un système GPIRS (« Global Positioning / Inertial Reference System » en anglais) 14a capable de fournir des informations de position de l'aéronef ainsi qu'un système 14b de mesure d'altitude barométrique (libellé BARO sur la figure). L'unité de traitement 16 comprend un processeur ou un microprocesseur. De façon particulière, elle fait partie d'un calculateur de l'aéronef, ce calculateur étant par exemple un calculateur dédié de type LRU (« Line Replaceable Unit » en anglais) ou un calculateur modulaire avionique de type IMA (« Integrated Modular Avionics » en anglais). Dans un mode de réalisation, l'unité de traitement fait partie d'un calculateur de guidage de l'aéronef, correspondant de façon avantageuse au système de guidage 20. Ce calculateur de guidage est par exemple relié en sortie à un directeur de vol (commandant l'affichage d'indications sur un écran d'affichage du cockpit 3 de l'aéronef) ou à un système de pilotage automatique de l'aéronef. Le dispositif d'affichage 18 correspond par exemple à un écran d'affichage de type PFD (« Primary Flight Display » en anglais). Le système d'aide à l'atterrissage 10 est par exemple localisé dans une soute avionique 2 de l'aéronef. La base de données 22 contient des informations relatives à différentes approches prédéterminées, par exemple des approches publiées mentionnées sur des cartes utilisées par les pilotes des aéronefs pour atterrir sur des pistes d'atterrissage d'aéroports. Dans un mode de réalisation, la base de données 22 est intégrée dans un calculateur de guidage de l'aéronef 1, en particulier un calculateur de type FMS (« Flight Management System » en anglais). Dans un autre mode de réalisation, la base de données 22 est hébergée sur un serveur de l'aéronef.

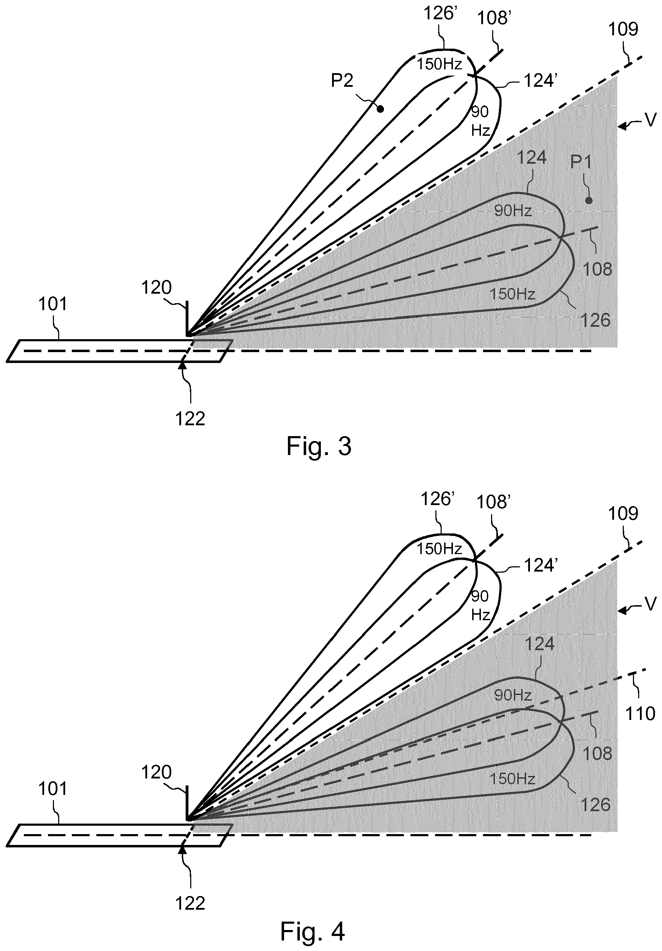

En fonctionnement, l'ensemble de sources d'informations 14 détermine de façon répétitive des informations de position courante de l'aéronef. Lorsque l'aéronef est en phase de descente vers un aéroport en vue d'atterrir sur une piste d'atterrissage 101 de l'aéroport selon une approche prédéterminée (en particulier une approche publiée) de ladite piste d'atterrissage, l'unité de traitement 16 acquiert au moins une desdites informations de position courante de l'aéronef via la liaison 15. De façon particulière, l'unité de traitement 16 acquiert une première information issue du système GPIRS 14a et une deuxième information issue du système de mesure d'altitude barométrique 14b. L'unité de traitement utilise la première information pour déterminer les coordonnées de la position courante de l'aéronef en projection dans un plan horizontal et elle utilise la deuxième information pour déterminer l'altitude correspondant à la position courante de l'aéronef. L'unité de traitement 16 acquiert également, de la base de données 22, des informations relatives à l'approche prédéterminée. Ces informations correspondent par exemple aux coordonnées du point d'intersection avec le sol de l'axe d'approche 108 (tel qu'illustré sur la figure 3) correspondant à ladite approche, ainsi que l'orientation et la pente de l'axe d'approche. En fonction des informations relatives à l'approche prédéterminée, l'unité de traitement détermine un volume de protection V dans lequel le récepteur 12 de signaux ILS ne risque pas de détecter une réplique du signal Glide. Comme indiqué précédemment, une telle réplique du signal Glide correspond à un faux axe Glide 108' dont la pente est un multiple de la pente de l'axe d'approche 108. Un cas fréquent de réplique du signal Glide correspond à un faux axe Glide 108' (aussi appelé réplique de l'axe Glide) dont la pente est triple de la pente de l'axe d'approche 108. Sans que l'invention soit limitée à cette valeur, la pente de l'axe d'approche 108 est par exemple de 3 degrés. Dans un tel cas, la pente triple du faux axe Glide 108' est de 9 degrés. Comme déjà indiqué en référence à la figure 2, le signal correspondant à la réplique du signal Glide comporte deux lobes 124' et 126' définissant le faux axe Glide 108'. Le volume de protection V est déterminé de façon à être situé en dessous des deux lobes 124' et 126'. Ainsi, lorsque la position courante de l'aéronef est dans le volume de protection V, le récepteur 12 de signaux ILS ne risque pas de détecter les signaux correspondant à ces deux lobes.

Dans un mode particulier de réalisation, le volume de protection V comporte une limite supérieure 109 correspondant à une pente prédéterminée d'approche de la piste d'atterrissage, cette pente prédéterminée d'approche étant égale à la pente de la réplique 108' de l'axe Glide moins une marge. Cette marge prédéterminée est définie de telle façon que le récepteur 12 de signaux ILS ne risque pas de détecter la réplique du signal Glide, correspondant aux deux lobes 124' et 126', lorsque la position courante de l'aéronef est située dans le volume de protection V. Dans l'exemple considéré d'un axe d'approche 108 dont la pente est égale à 3 degrés, correspondant à une réplique 108' de l'axe Glide de pente égale à 9 degrés, une marge prédéterminée de 2 degrés permet d'éviter la détection de la réplique du signal Glide par le récepteur 12 de signaux ILS. La limite supérieure 109 du volume de protection V correspond alors à une pente d'approche de la piste d'atterrissage égale à 7 degrés. De façon avantageuse, pour une pente de la réplique 108' de l'axe Glide égale à 9 degrés, la pente d'approche correspondant à la limite supérieure 109 du volume de protection est choisie dans un intervalle de 5 à 8 degrés (correspondant à une marge prédéterminée comprise entre 4 degrés et 1 degré).

De façon particulière, la limite supérieure 109 du volume de protection V correspond à un plan incliné selon ladite pente prédéterminée (par exemple égale à 7 degrés), ce plan incliné étant perpendiculaire à un plan vertical contenant l'axe d'approche 108.

L'unité de traitement 16, connaissant la position courante de l'aéronef, détermine si la position courante de l'aéronef est au-dessus du volume de protection V. Si la position courante de l'aéronef est au-dessus du volume de protection V, telle que par exemple la position P2 représentée sur la figure 3, l'unité de traitement 16 commande l'inhibition de la capture du signal Glide par le récepteur 12 de signaux ILS et elle commande également l'émission d'une information d'alerte dans le cockpit 3 de l'aéronef. Ainsi, le récepteur 12 de signaux ILS ne risque pas de capturer les signaux des deux lobes 124' et 126' correspondant à la réplique 108' de l'axe Glide. Par conséquent, le récepteur 12 ne capture pas la réplique 108' de l'axe Glide. L'affichage de l'alerte dans le cockpit permet d'informer un pilote de l'aéronef qu'il n'est pas possible de capturer l'axe d'approche 108. Le pilote peut alors anticiper les actions de pilotage appropriées, par exemple une remise des gaz en vue de réaliser une nouvelle approche. L'affichage de l'alerte correspond par exemple à l'affichage d'une indication « TOO HIGH » en rouge sur un écran primaire de pilotage de type PFD (« Primary Flight Display » en anglais) du cockpit 3. De façon avantageuse, une alerte audio est associée à cet affichage. Si la position courante de l'aéronef est dans le volume de protection V, telle que par exemple la position P1 représentée sur la figure 3, l'unité de traitement 16 ne commande pas l'inhibition de la capture du signal Glide par le récepteur 12 de signaux ILS. Par conséquent, le récepteur 12 peut capturer l'axe Glide 108 lorsqu'il reçoit les signaux des lobes 124 et 126.

Dans un mode de réalisation avantageux illustré par la figure 4, le récepteur 12 de signaux ILS détermine, en fonction des signaux ILS reçus, si la position courante de l'aéronef est au-dessus d'un axe d'approche 110 dont la pente correspond à la pente de l'axe d'approche 108 augmentée d'une marge. Pour une pente de l'axe d'approche 108 égale à 3 degrés, la pente de l'axe d'approche 110 est par exemple choisie égale à 3,4 degrés (correspondant à +1,5 dot par rapport à l'axe Glide sur une échelle d'affichage Glide d'un écran PFD du cockpit de l'aéronef). Lorsque la position courante de l'aéronef est au-dessus de l'axe 110, le récepteur de signaux ILS commande l'affichage d'une alerte sur l'écran PFD (par exemple un texte « ABOVE GLIDE ») afin d'informer un pilote de l'aéronef que l'aéronef est au-dessus de l'axe Glide.

## Revendications

1. Système (10) d'aide à l'atterrissage d'un aéronef (1) sur une piste d'atterrissage (101) d'un aéroport équipé d'un système d'atterrissage aux instruments dit ILS, ce système ILS correspondant à un axe d'une approche prédéterminée de la piste d'atterrissage, le système d'aide à l'atterrissage comportant :
- un récepteur (12) de signaux ILS ;
- un ensemble (14) de sources d'informations configurées pour déterminer des informations de position courante de l'aéronef ; et
- une base de données (22) comprenant des informations relatives à ladite approche prédéterminée,
**caractérisé en ce que** le système d'aide à l'atterrissage comporte en outre une unité de traitement (16) configurée pour, lorsque le récepteur (12) de signaux ILS n'a pas encore capturé un signal Glide correspondant à un axe Glide (108) de l'approche :
- acquérir, de l'ensemble (14) de sources d'informations, une information de position courante de l'aéronef ;
- acquérir, de la base de données (22), des informations relatives à l'approche prédéterminée ;
- déterminer, en fonction des informations relatives à l'approche prédéterminée, un volume de protection (V) dans lequel le récepteur de signaux ILS ne risque pas de détecter une réplique du signal Glide ;
- déterminer si la position courante de l'aéronef est au-dessus du volume de protection ; et
- lorsque la position courante de l'aéronef est au-dessus du volume de protection, inhiber la capture du signal Glide par le récepteur de signaux ILS et commander l'émission d'une information d'alerte dans le cockpit de l'aéronef.

2. Système selon la revendication 1, **caractérisé en ce que** l'unité de traitement (16) est configurée pour déterminer le volume de protection (V) comme comportant une limite supérieure (109) correspondant à une pente prédéterminée d'approche de la piste d'atterrissage (101), cette pente prédéterminée d'approche étant égale à la pente d'une réplique (108') de l'axe Glide moins une marge.

3. Système selon la revendication 2, **caractérisé en ce que** ladite marge est une marge prédéterminée définie de telle façon que le récepteur (12) de signaux ILS ne risque pas de détecter la réplique du signal Glide lorsque la position courante de l'aéronef est située dans le volume de protection (V).

4. Système selon l'une quelconque des revendications précédentes, **caractérisé en ce que** l'ensemble (14) de sources d'informations comprend un récepteur (14a) de données de navigation par satellites et un système (14b) de mesure d'altitude barométrique.

5. Procédé d'aide à l'atterrissage d'un aéronef (1) sur une piste d'atterrissage (101) d'un aéroport équipé d'un système d'atterrissage aux instruments dit ILS, ce système ILS correspondant à un axe d'une approche prédéterminée de la piste d'atterrissage, l'aéronef comportant :
- un récepteur (12) de signaux ILS ;
- un ensemble (14) de sources d'informations configurées pour déterminer des informations de position courante de l'aéronef ; et
- une base de données (22) comprenant des informations relatives à ladite approche prédéterminée,
**caractérisé en ce qu'**il comprend les étapes suivantes mises en œuvre par une unité de traitement (16) lorsque le récepteur (12) de signaux ILS n'a pas encore capturé le signal Glide :
- acquérir, de l'ensemble (14) de sources d'informations, une information de position courante de l'aéronef ;
- acquérir, de la base de données (22), des informations relatives à l'approche prédéterminée ;
- déterminer, en fonction des informations relatives à l'approche prédéterminée, un volume de protection (V) dans lequel le récepteur de signaux ILS ne risque pas de détecter une réplique du signal Glide ;
- déterminer si la position courante de l'aéronef est au-dessus du volume de protection ; et
- lorsque la position courante de l'aéronef est au-dessus du volume de protection, inhiber la capture du signal Glide par le récepteur de signaux ILS et commander l'émission d'une information d'alerte dans le cockpit de l'aéronef.

6. Procédé selon la revendication 5, **caractérisé en ce qu'**à l'étape de détermination du volume de protection (V), le volume de protection est déterminé comme comportant une limite supérieure (109) correspondant à une pente prédéterminée d'approche de la piste d'atterrissage, cette pente prédéterminée d'approche étant égale à la pente d'une réplique (108') de l'axe Glide moins une marge.

7. Procédé selon la revendication 5, **caractérisé en ce que** ladite marge est une marge prédéterminée définie de telle façon que le récepteur (12) de signaux ILS ne risque pas de détecter la réplique du signal Glide lorsque la position courante de l'aéronef est située dans le volume de protection (V).

8. Procédé selon l'une quelconque des revendications 5-7, **caractérisé en ce qu'**à l'étape d'acquisition de l'information de position courante de l'aéronef, l'information de position courante de l'aéronef est acquise pour partie d'un récepteur (14a) de données de navigation par satellites et pour partie d'un système (14b) de mesure d'altitude barométrique.

9. Aéronef (1) comprenant un système (10) d'aide à l'atterrissage selon l'une quelconque des revendications 1 à 4.

## Patentansprüche

1. Landehilfesystem (10) für die Landung eines Luftfahrzeugs (1) auf einer Landebahn (101) eines Flughafens, der mit einem Instrumentenlandesystem, ILS genannt, ausgestattet ist, wobei dieses System ILS einer Achse eines vorbestimmten Anflugs an die Landebahn entspricht, wobei das Landehilfesystem aufweist:
- einen Empfänger (12) für ILS-Signale;
- eine Gesamtheit (14) von Informationsquellen, die dafür ausgelegt sind, Informationen über die aktuelle Position des Luftfahrzeugs zu bestimmen; und
- eine Datenbank (22), die Informationen in Bezug auf den vorbestimmten Anflug umfasst,
**dadurch gekennzeichnet, dass** Landehilfesystem außerdem eine Verarbeitungseinheit (16) aufweist, die, wenn der Empfänger (12) für ILS-Signale noch kein Gleitwegsignal aufgefangen hat, das einer Gleitwegachse (108) des Anflugs entspricht, ausgelegt ist zum:
- Erfassen, von der Gesamtheit (14) von Informationsquellen, einer aktuellen Positionsinformation des Luftfahrzeugs;
- Erfassen, von der Datenbank (22), von Informationen in Bezug auf den vorbestimmten Anflug;
- Bestimmen, in Abhängigkeit von den Informationen in Bezug auf den vorbestimmten Anflug, eines Schutzvolumens (V), in welchem der Empfänger für ILS-Signale nicht Gefahr läuft, eine Replik des Gleitwegsignals zu detektieren;
- Bestimmen, ob sich die aktuelle Position des Luftfahrzeugs oberhalb des Schutzvolumens befindet; und
- wenn sich die aktuelle Position des Luftfahrzeugs oberhalb des Schutzvolumens befindet, Verhindern der Erfassung des Gleitwegsignals durch den Empfänger für ILS-Signale und Bewirken der Ausgabe einer Warninformation im Cockpit des Luftfahrzeugs.

2. System nach Anspruch 1, **dadurch gekennzeichnet, dass** die Verarbeitungseinheit (16) dafür ausgelegt ist, das Schutzvolumen (V) als eine obere Grenze (109) aufweisend zu bestimmen, die einer vorbestimmten Neigung des Anflugs an die Landebahn (101) entspricht, wobei diese vorbestimmte Anflugneigung gleich der Neigung einer Replik (108') der Gleitwegachse abzüglich einer Spanne ist.

3. System nach Anspruch 2, **dadurch gekennzeichnet, dass** die Spanne eine vorbestimmte Spanne ist, die derart definiert ist, dass der Empfänger (12) für ILS-Signale nicht Gefahr läuft, die Replik des Gleitwegsignals zu detektieren, wenn sich die aktuelle Position des Luftfahrzeugs in dem Schutzvolumen (V) befindet.

4. System nach einem der vorhergehenden Ansprüche, **dadurch gekennzeichnet, dass** die Gesamtheit (14) von Informationsquellen einen Empfänger (14a) für Satellitennavigationsdaten und ein System (14b) zur barometrischen Höhenmessung umfasst.

5. Landehilfeverfahren für die Landung eines Luftfahrzeugs (1) auf einer Landebahn (101) eines Flughafens, der mit einem Instrumentenlandesystem, ILS genannt, ausgestattet ist, wobei dieses System ILS einer Achse eines vorbestimmten Anflugs an die Landebahn entspricht, wobei das Luftfahrzeug aufweist:
- einen Empfänger (12) für ILS-Signale;
- eine Gesamtheit (14) von Informationsquellen, die dafür ausgelegt sind, Informationen über die aktuelle Position des Luftfahrzeugs zu bestimmen; und
- eine Datenbank (22), die Informationen in Bezug auf den vorbestimmten Anflug umfasst,
**dadurch gekennzeichnet, dass** es die folgenden Schritte umfasst, die von einer Verarbeitungseinheit (16) durchgeführt werden, wenn der Empfänger (12) für ILS-Signale das Gleitwegsignal noch nicht aufgefangen hat:
- Erfassen, von der Gesamtheit (14) von Informationsquellen, einer aktuellen Positionsinformation des Luftfahrzeugs;
- Erfassen, von der Datenbank (22), von Informationen in Bezug auf den vorbestimmten Anflug;
- Bestimmen, in Abhängigkeit von den Informationen in Bezug auf den vorbestimmten Anflug, eines Schutzvolumens (V), in welchem der Empfänger für ILS-Signale nicht Gefahr läuft, eine Replik des Gleitwegsignals zu detektieren;
- Bestimmen, ob sich die aktuelle Position des Luftfahrzeugs oberhalb des Schutzvolumens befindet; und
- wenn sich die aktuelle Position des Luftfahrzeugs oberhalb des Schutzvolumens befindet, Verhindern der Erfassung des Gleitwegsignals durch den Empfänger für ILS-Signale und Bewirken der Ausgabe einer Warninformation im Cockpit des Luftfahrzeugs.

6. Verfahren nach Anspruch 5, **dadurch gekennzeichnet, dass** im Schritt der Bestimmung des Schutzvolumens (V) das Schutzvolumen (V) als eine obere Grenze (109) aufweisend bestimmt wird, die einer vorbestimmten Neigung des Anflugs an die Landebahn entspricht, wobei diese vorbestimmte Anflugneigung gleich der Neigung einer Replik (108') der Gleitwegachse abzüglich einer Spanne ist.

7. Verfahren nach Anspruch 5, **dadurch gekennzeichnet, dass** die Spanne eine vorbestimmte Spanne ist, die derart definiert ist, dass der Empfänger (12) für ILS-Signale nicht Gefahr läuft, die Replik des Gleitwegsignals zu detektieren, wenn sich die aktuelle Position des Luftfahrzeugs in dem Schutzvolumen (V) befindet.

8. Verfahren nach einem der Ansprüche 5-7, **dadurch gekennzeichnet, dass** im Schritt der Erfassung der aktuellen Positionsinformation des Luftfahrzeugs die aktuelle Positionsinformation des Luftfahrzeugs zum Teil von einem Empfänger (14a) für Satellitennavigationsdaten und zum Teil von einem System (14b) zur barometrischen Höhenmessung erfasst wird.

9. Luftfahrzeug (1), welches ein Landehilfesystem (10) nach einem der Ansprüche 1 bis 4 umfasst.

## Claims

1. System (10) for aiding the landing of an aircraft (1) on a landing runway (101) of an airport equipped with a so-called ILS instrument landing system, this ILS system corresponding to an axis of a predetermined approach to the landing runway, the landing aid system comprising:
- an ILS signals receiver (12);
- a set (14) of information sources configured to determine items of information in respect of current position of the aircraft; and
- a database (22) comprising items of information relating to the said predetermined approach,
**characterized in that** the landing aid system furthermore comprises a processing unit (16) configured to, when the ILS signals receiver (12) has not yet captured a Glide signal corresponding to a Glide axis (108) of the approach:
- acquire, from the set (14) of information sources, an item of information in respect of current position of the aircraft;
- acquire, from the database (22), items of information relating to the predetermined approach;
- determine, as a function of the items of information relating to the predetermined approach, a protection volume (V) in which there is no risk of the ILS signals receiver detecting a replica of the Glide signal;
- determine whether the current position of the aircraft is above the protection volume; and
- when the current position of the aircraft is above the protection volume, inhibit the capture of the Glide signal by the ILS signals receiver and instruct the emission of an alert item of information in the cockpit of the aircraft.

2. System according to Claim 1, **characterized in that** the processing unit (16) is configured to determine the protection volume (V) as comprising an upper limit (109) corresponding to a predetermined approach slope to the landing runway (101), this predetermined approach slope being equal to the slope of a replica (108') of the Glide axis minus a margin.

3. System according to Claim 2, **characterized in that** the said margin is a predetermined margin defined in such a way that there is no risk of the ILS signals receiver (12) detecting the replica of the Glide signal when the current position of the aircraft is situated in the protection volume (V).

4. System according to any one of the preceding claims, **characterized in that** the set (14) of information sources comprises a receiver (14a) of satellite navigation data and a barometric altitude measurement system (14b).

5. Method for aiding the landing of an aircraft (1) on a landing runway (101) of an airport equipped with a so-called ILS instrument landing system, this ILS system corresponding to an axis of a predetermined approach to the landing runway, the aircraft comprising:
- an ILS signals receiver (12);
- a set (14) of information sources configured to determine items of information in respect of current position of the aircraft; and
- a database (22) comprising items of information relating to the said predetermined approach,
**characterized in that** it comprises the following steps implemented by a processing unit (16) when the ILS signals receiver (12) has not yet captured the Glide signal:
- acquire, from the set (14) of information sources, an item of information in respect of current position of the aircraft;
- acquire, from the database (22), items of information relating to the predetermined approach;
- determine, as a function of the items of information relating to the predetermined approach, a protection volume (V) in which there is no risk of the ILS signals receiver detecting a replica of the Glide signal;
- determine whether the current position of the aircraft is above the protection volume; and
- when the current position of the aircraft is above the protection volume, inhibit the capture of the Glide signal by the ILS signals receiver and instruct the emission of an alert item of information in the cockpit of the aircraft.

6. Method according to Claim 5, **characterized in that** in the step of determining the protection volume (V), the protection volume is determined as comprising an upper limit (109) corresponding to a predetermined approach slope to the landing runway, this predetermined approach slope being equal to the slope of a replica (108') of the Glide axis minus a margin.

7. Method according to Claim 5, **characterized in that** the said margin is a predetermined margin defined in such a way that there is no risk of the ILS signals receiver (12) detecting the replica of the Glide signal when the current position of the aircraft is situated in the protection volume (V).

8. Method according to any one of Claims 5 to 7, **characterized in that** in the step of acquiring the item of information in respect of current position of the aircraft, the item of information in respect of current position of the aircraft is acquired in part from a receiver (14a) of satellite navigation data and in part from a barometric altitude measurement system (14b).

9. Aircraft (1) comprising a landing aid system (10) according to any one of Claims 1 to 4.
